# EUROPÄISCHE PATENTSCHRIFT

(11) **EP 3 079 209 B1**
(45) Veröffentlichungstag und Bekanntmachung des Hinweises auf die Patenterteilung: **31.10.2018**
(21) Anmeldenummer: 15001005.6
(22) Anmeldetag: 09.04.2015
(51) Int. Cl.: H01R 13/447, H02G 3/14, H01R 24/76

(54) **BEFESTIGUNGSEINRICHTUNG**
FIXING DEVICE
DISPOSITIF DE FIXATION

(43) Veröffentlichungstag der Anmeldung: 12.10.2016
(73) Patentinhaber: TCS TürControlSysteme AG, 39307 Genthin (DE)
(72) Erfinder: Gummert, Gerald, 39291 Wörmelitz (DE)
(74) Vertreter: Friedrich, Andreas

(56) Entgegenhaltungen:
- EP-A1- 0 176 617
- EP-A2- 1 575 070
- EP-A2- 1 848 066
- CH-A1- 701 228
- CH-A2- 705 788
- DE-A1-102013 102 445
- DE-U1-202013 104 632
- US-A1- 2011 117 760

## Beschreibung

Die Erfindung betrifft eine Befestigungseinrichtung zum Befestigen eines ersten elektrischen und/oder elektronischen Betriebselementes und eines zweiten elektrischen und/oder elektronischen Betriebselementes an oder in einer Wand, wobei das erste Betriebselement in eine erste Position und in eine zweite Position bringbar ist und das zweite Betriebselement nur zugänglich ist, wenn sich das erste Betriebselement in der zweiten Position befindet, wobei das erste Betriebselement unabhängig von der Position, in der es sich befindet, zugänglich und bestimmungsgemäß benutzbar ist, wobei das zweite Betriebselement eine Steckdose ist, wobei das erste Betriebselement auf einem Schieber angeordnet ist, der entlang von Schienen in einem Rahmen aus der ersten Position in die zweite Position und umgekehrt verschiebbar gelagert ist.

Eine gattungsgemäße Befestigungseinrichtung ist aus der CH 701228 A1 bekannt.

In der konventionellen Gebäudeinstallationstechnik werden Geräte wie Schalter oder Steckdosen, die in diesem Fall das erste und das zweite Betriebselement bilden, auf getrennten Montageplätzen nebeneinander oder an der Wand übereinander montiert. Dabei werden als erstes und zweites Betriebselement häufig eine Steckdose und ein Schalter, beispielsweise ein Licht- oder Jalousieschalter verwendet. Da beide Betriebselemente nebeneinander angeordnet werden müssen, ist der Montage- und Materialaufwand bei der Erstinstallation hoch und die Flächenausnutzung wenig effektiv, insbesondere, da einzelne Funktionen der unterschiedlichen Betriebselemente nur zeitweise und gegebenenfalls nur selten benutzt werden. Dies gilt insbesondere für Steckdosen zur Verbindung eines elektrischen Gerätes mit einer elektrischen Spannungsquelle bzw. einem elektrischen Stromnetz, die oftmals nur zweitweise verwendet werden. Die Steckdose selbst ist jedoch unabhängig von der Benutzung sichtbar und in der Regel ästhetisch wenig ansprechend.

Insbesondere um den optischen Gestaltungsspielraum zu vergrößern, aber auch um die Betriebselemente vor unbefugtem oder unsachgemäßem Zugriff, beispielsweise durch Kinder, zu bewahren, ist es aus dem Stand der Technik bekannt, Steckdosen mit einer Abdeckung zu versehen. Diese ist funktionslos und dient allenfalls als Designelement.

Aus der DE 20 2013 014 632 U1 ist eine Vorrichtung zum Anschluss elektrischer Geräte, mithin also eine Steckdose bekannt, die in einen Tisch oder eine Arbeitsplatte eingelassen wird und von einer Abdeckung abgedeckt wird, die mit einer drahtlosen Energieübertragungseinrichtung, beispielsweise einer Induktionsspule, versehen ist. Auf diese Abdeckung kann beispielsweise ein Mobilfunkgerät aufgelegt werden, um den darin enthaltenen Akku aufzuladen. Diese Ausgestaltung ist jedoch auf horizontale Flächen beschränkt und kann bei Wänden, die sich in aller Regel senkrecht erstrecken, nicht verwendet werden, da ein aufzuladendes technisches Gerät nicht aufgelegt werden kann.

Die aus dem Stand der Technik bekannten Befestigungseinrichtungen sind folglich mit einem hohen Montage- und Materialaufwand in der Erstinstallation verbunden, benötigen relativ viel Wandfläche und sind zudem nur sehr schwer oder gar nicht nachzurüsten, wenn beispielsweise die Art des verwendeten Betriebselementes oder, noch gravierender, die Anzahl der verwendeten Betriebselemente verändert, insbesondere erhöht werden soll. Die Nachrüstung weiterer Funktionen auf vorhandenen Montageplätzen ist mit der konventionellen Gebäudeinstallationstechnik, wie sie aus dem Stand der Technik bekannt ist, nahezu unmöglich und eine Nachrüstung zusätzlicher Montageplätze oder Befestigungseinrichtungen ist aufwendig und damit kostenintensiv.

Die EP 0 176 617 A1 beschreibt eine elektronische Schaltuhr, die in einer Steckdose einsteckbar ist. Dabei wird die Schaltuhr als zusätzliche Funktion bereitgestellt, da weiterhin ein Stecker eines elektrischen Verbrauchers in eine Steckdose, die Teil der elektronischen Schaltuhr ist, eingesteckt werden kann.

Die EP 1 848 066 A2 beschreibt eine Dichte, gesicherte Stromanschlussvorrichtung, bei der über vorhandene Schalter zwischen zwei unterschiedlichen Stromversorgungskreisen umgeschaltet werden kann.

Die EP 1 575 070 A2 offenbart ein Eingabegerät eines Installationsgerätes, bei dem eine Steckdose durch ein mit mehreren Tastsensoren versehenes Kipp- und Schwenkelement abgedeckt ist. Ähnliche Ausgestaltungen von mit einem Deckel abgedeckten Steckdosen sind aus der US 2011/0117760 A1 und der CH 705788 A2 bekannt. Die DE 10 2013 102 445 A1 hingegen beschreibt eine schaltbare Steckdose, bei der die Steckdose durch ein schwenkbares Deckelelement abgedeckt ist. Wird der Deckel verschwenkt wird einerseits die darunter liegende Steckdose zugänglich und andererseits der hinter der Steckdose liegende Schalter betätigt, sodass die Steckdose auch mit elektrischem Strom bzw. Spannung beaufschlagt ist. Dabei verliert der Deckel seine Schaltfunktion.

Der vorliegenden Erfindung liegt daher die Aufgabe zugrunde, diese im Stand der Technik vorhandenen Nachteile zu beheben oder zumindest zu lindern.

Die Erfindung löst die gestellte Aufgabe durch eine Befestigungseinrichtung gemäß dem Oberbegriff des Anspruchs 1, die sich dadurch auszeichnet, dass der Rahmen Tastelemente aufweist, um eine Verriegelung des Schiebers gegen Verschieben entlang der Schienen aufzuheben.

Eine erfindungsgemäße Befestigungseinrichtung kann beispielsweise eine Installationsdose sein oder an oder in einer solchen befestigt werden. Derartige Installationsdosen gibt es in den Variationen Unterputz, Aufputz, Imputz oder als Kanal, die unterschiedliche Positionierungen an oder in der Wand aufweisen und sämtlich für die vorliegende Erfindung geeignet sind. Der Vorteil der erfindungsgemäßen Befestigungseinrichtung liegt darin, dass wenigstens zwei elektrische und/oder elektronische Betriebselemente so angeordnet werden, dass sie einander überdecken. Die beiden Betriebselemente werden folglich nicht, wie dies aus dem Stand der Technik bekannt ist, neben- oder übereinander an der Wand angeordnet, so dass jedes der Betriebselemente einen Teil der Wandfläche benötigt. Vielmehr werden sie hintereinander, vorzugsweise in einer Richtung senkrecht zu der Wandfläche, in oder an der die Befestigungseinrichtung angeordnet ist, angeordnet. Das erste Betriebselement ist dabei unabhängig von der Position, in der es sich befindet, zugänglich und kann verwendet, betätigt oder auf sonstige Weise bestimmungsgemäß benutzt werden. Das sich dahinter befindende zweite Betriebselement ist im Gegensatz dazu nur zugänglich, wenn sich das erste Betriebselement in der zweiten Position befindet. Anderenfalls wird es durch das erste Betriebselement verdeckt und kann nicht verwendet werden. Dadurch wird die Wandfläche, die von den beiden Betriebselementen benötigt wird, zumindest für den Fall reduziert, dass das zweite Betriebselement nicht benötigt wird. In diesem Fall wird es durch das erste Betriebselement überdeckt und ist nicht sichtbar.

Soll das zweite Betriebselement jedoch verwendet werden, wird das erste Betriebselement aus der ersten Position in die zweite Position gebracht. Auch in dieser Position ist das erste Betriebselement verwendbar, so dass es in dieser Position möglich ist, beide Betriebselemente gleichzeitig zu betätigen oder auf sonstige Weise zu verwenden. Vorteilhafterweise verbleibt dabei das erste Betriebselement in der zweiten Position, bis es manuell oder durch ein Antriebselement angetrieben aus der zweiten Position in die erste Position zurückbewegt wird.

Die erfindungsgemäße Befestigungseinrichtung ist an vertikalen, nahezu vertikalen oder schräg verlaufenden Wandungen, beispielsweise Wänden, Hohlwänden, Installationskanälen, Säulen oder ähnlichem, verwendbar. Sie ist jedoch nicht auf ein derartiges Montageumfeld beschränkt, sondern kann auch an sich horizontal erstreckenden Flächen, beispielsweise Arbeitsflächen, Fußböden oder Decken, verwendet werden.

Durch die erfindungsgemäße Befestigungseinrichtung wird folglich eine räumliche Anordnung von wenigstens zwei Funktionen, die durch die beiden Betriebselemente realisiert werden, auf nur einem Montageplatz bzw. in oder an einer Installationsdose erreicht. Dadurch wird die benötigte Fläche halbiert.

In einer bevorzugten Ausgestaltung ist das erste Betriebselement aus der ersten Position in die zweite Position und umgekehrt verschwenkbar, klappbar oder verschiebbar. Zum Verschwenken kann das erste Betriebselement beispielsweise um eine Schwenkachse verlagerbar sein, die sich vorzugsweise senkrecht zu der Wand oder Fläche erstreckt, an oder in der die Befestigungseinrichtung angeordnet ist. So ist es beispielsweise möglich, dass erste Betriebselement, das beispielsweise viereckig, insbesondere rechteckig oder quadratisch ausgebildet sein kann, an nur einer Ecke der Befestigungseinrichtung anzuordnen. Dadurch wird eine Schwenkachse definiert, um die das erste Betriebselement schwenkbar ist, um das darunter liegende zweite Betriebselement abzudecken oder freizugeben.

Soll das erste Betriebselement verschiebbar ausgebildet werden, verfügt die Befestigungseinrichtung vorteilhafterweise über Schienen oder Führungen, entlang derer das erste Betriebselement verschoben werden kann. Die Verschiebung kann dabei in unterschiedliche Raumrichtungen stattfinden, wobei durch das Verschieben des ersten Betriebselementes das zweite Betriebselement abgedeckt oder freigegeben wird.

Der Vorteil eines in dieser Form verschiebbaren oder verschwenkbaren ersten Betriebselementes liegt darin, dass die sichtbare und zugängliche Fläche des ersten Betriebselementes sowohl in der ersten Position als auch in der zweiten Position identisch ist und so das erste Betriebselement zugänglich bleibt.

Alternativ oder zusätzlich dazu kann das erste Betriebselement auch klappbar ausgebildet sein. Dies bedeutet, dass das erste Betriebselement um eine Achse drehbar gelagert ist, die parallel zu der Wand oder Fläche, an oder in der die Befestigungseinrichtung angeordnet ist, verläuft. Dies kann beispielsweise durch Scharniere realisiert werden, über die das erste Betriebselement am verbleibenden Teil der Befestigungseinrichtung angeordnet ist. Wird das erste Betriebselement in dieser Form klappbar ausgebildet, lässt sich durch eine Umklappung um 180° erreichen, dass in der ersten Position und der zweiten Position des ersten Betriebselementes einander gegenüberliegende Flächen des ersten Betriebselementes sichtbar und zugänglich sind. Somit kann das Betriebselement in der ersten Position und in der zweiten Position unterschiedliche Funktionen erfüllen.

Vorteilhafterweise verfügen das erste Betriebselement und das zweite Betriebselement über eine gemeinsame Schnittstelle zum Anschließen an eine elektrische Spannung. Die Betriebselemente der Befestigungseinrichtung sind elektrisch und/oder elektronisch ausgebildet, so dass sie eine Verbindung zu einer elektrischen Energiequelle benötigen. Diese kann natürlich eine in einer Wand laufende Stromleitung sein, an die die Betriebselemente angeschlossen werden. Insbesondere für den Fall, dass bestehende Installationen, beispielsweise vorhandene Installationsdosen, nachgerüstet und um zusätzliche Funktionen und zusätzliche Betriebselemente erweitert werden sollen, ist es daher von Vorteil, wenn beide Betriebselemente den gleichen Anschluss an ein elektrisches Stromkabel und damit die gleiche Verbindung zu einer elektrischen Spannung aufweisen.

Vorteilhafterweise handelt es sich bei dem ersten Betriebselement und/oder dem zweiten Betriebselement um ein Bedienelement, insbesondere einen Hub-, Dreh-, Kipp- oder Schiebeschalter. Das Bedienelement kann vorteilhafterweise auch einen Berührungssensor, beispielsweise ein Touchpad, oder einen Näherungs- oder Bewegungssensor aufweisen. Die Funktionalität, die durch ein auf diese Weise ausgebildetes Betriebselement erfüllt wird, kann dabei fest strukturiert, beispielsweise herstellerseitig eingestellt sein, oder nutzerseitig definiert werden. So ist es insbesondere bei elektronischen Ausführungen möglich, das jeweilige Betriebselement programmierbar auszugestalten und so die gewünschten Funktionalitäten individuell festzulegen oder aus einer Liste verfügbarer Funktionalitäten auszuwählen. Dies kann in besonders einfacher Weise durch den Nutzer, beispielsweise den Bewohner eines Hauses geschehen oder durch einen Installateur bei der Installation der Befestigungseinrichtung. Ein solches Bedienelement kann auch an dem Betriebselement lösbar befestigt sein, indem beispielsweise eine Fernbedienung oder ein anderes Bedienelement, beispielsweise durch eine Clips-, Schnapp-, oder Steckverbindung an dem Betriebselement angeordnet ist.

Alternativ oder zusätzlich dazu weist das erste Betriebselement und/oder das zweite Betriebselement ein Versorgungselement auf. Unter einem Versorgungselement wird im Rahmen der vorliegenden Erfindung insbesondere alles verstanden, was zur Versorgung eines zusätzlichen externen Gerätes, das nicht Teil der Befestigungseinrichtung ist, nötig ist. Dies umfasst vorteilhafterweise eine Steckdose für die Stromversorgung und/oder eine Einsteckbuchse für einen Stecker, beispielsweise eine Schnittstelle für ein Datenkabel, ein Netzwerkkabel, einen USB-Anschluss oder eine sonstige Schnittstelle. Wird das entsprechende Betriebselement verwendet, um ein separates Bauteil oder Gerät mit elektrischem Strom bzw. einer elektrischen Spannung zu versorgen, kann dies auf unterschiedliche Weisen geschehen. Die Befestigungseinrichtung und insbesondere das jeweilige Betriebselement selbst können eine Spannungsquelle und/oder eine Vorrichtung zum Erzeugen einer elektrischen Spannung aufweisen. Dies kann beispielsweise als Akkumulator oder Batterie oder als Solarzelle realisiert werden. Diese Ausgestaltung hat den Vorteil, dass das jeweilige Betriebselement keinen Anschluss an eine gegebenenfalls in der Wand verlaufende, elektrische Leitung benötigt. Die Montage ist somit auch von Laien sicher durchzuführen, so dass der Montage- und/oder Umrüstaufwand reduziert wird.

Alternativ dazu kann auch eine netzabhängige Spannungs- oder Stromversorgung vorhanden sein. In diesem Fall benötigt das jeweilige Betriebselement eine Verbindung zu der in der Wand verlaufenden elektrischen Leitung. Die Montage sollte in diesem Fall nur von einem Fachmann, beispielsweise einem Elektriker, durchgeführt werden.

In einer bevorzugten Ausgestaltung weist das erste Betriebselement und/oder das zweite Betriebselement ein Anzeigeelement auf. Vorzugsweise handelt es sich um ein optisches und/oder akustisches Anzeigeelement, beispielsweise die Anzeige eines Thermostates, eines Messgerätes, wie beispielsweise eines Thermometers oder eines Barometers, oder einen Monitor, beispielsweise einer Türgegensprechanlage. Insbesondere ein optisches Anzeigeelement kann auch in Form einer oder mehrerer gegebenenfalls farbig ausgestalteter LEDs oder sonstiger Lichtquellen vorliegen. Besonders vorteilhafterweise handelt es sich bei dem Anzeigeelement um einen Monitor.

Wie bereits dargelegt, verfügt die Befestigungsvorrichtung vorteilhafterweise über eine Spannungsquelle und/oder eine Vorrichtung zum Erzeugen einer elektrischen Spannung. Die auf diese Weise bereitgestellte elektrische Energie kann jedoch nicht nur verwendet werden, wenn das Betriebselement ein Versorgungselement aufweist. Die elektrische Energie kann auch verwendet werden, um das jeweilige Betriebselement selbst zu betreiben und somit unabhängig von einer Verbindung zu einer elektrischen Leitung zu sein.

Insbesondere für den Fall, dass ein Betriebselement als Bedienelement ausgebildet ist, bietet es sich an, dieses als Schalter auszubilden. Der Schalter kann dabei für ein direktes Leistungsschalten von Verbrauchern verwendet werden. Auf diese Weise können beispielsweise Lichtschalter oder Jalousieschalter verwendet werden. Das jeweilige Betriebselement könnte als Kombinationsgerät, insbesondere in Form einer Steckdosenerweiterung, ausgeführt werden und die Spannungsversorgung und das direkte Schalten eines Verbrauchers übernehmen. Ein Schaltsignal wird in diesem Fall vorzugsweise über eine Infrarotübertragung oder eine Funkstrecke an ein räumlich getrenntes Gerät übermittelt. Besonders vorteilhafterweise lässt sich dies in einer Standarddose verwirklichen. Alternativ oder zusätzlich dazu kann auch ein Sender für ein indirektes Schalten von Verbrauchern über einen räumlich abgesetzten Aktor vorgesehen sein. Ein Schaltsignal wird in diesem Fall beispielsweise über eine Infrarotübertragung an ein räumlich getrenntes Gerät übermittelt. Dadurch ist eine direkte Verbindung dieses Schalters zu der Stromversorgung des zu schaltenden Verbrauchers, beispielsweise als Schalter in der Stromleitung, nicht mehr nötig, so dass auch das jeweilige Betriebselement ohne elektrische Verbindung zum Leitungsnetz des Gebäudes ausgebildet sein kann. In diesem Fall benötigt die Befestigungseinrichtung oder das jeweilige Betriebselement eine separate Spannungsquelle.

Durch die erfindungsgemäße Befestigungseinrichtung wird erreicht, dass mehrere Funktionalitäten durch wenigstens zwei unterschiedliche oder identische Betriebselemente räumlich platzsparend angeordnet werden und dennoch permanent verfügbar sind. Insbesondere für elektronische Betriebselemente ist es dabei möglich, beispielsweise in Abhängigkeit der Position des ersten Betriebselementes, die Funktionalität zu wechseln. Das erste Betriebselement kann beispielsweise als ein Jalousieschalter ausgebildet sein, wenn es sich in der ersten Position befindet, und in der zweiten Position als Monitor einer Türgegensprechanlage verwendet werden. Dies ist insbesondere dann von Vorteil, wenn das zweite Betriebselement, das erst zugänglich wird, wenn sich das erste Betriebselement in der zweiten Position befindet, beispielsweise ein Lautsprecher oder ein Mikrofon für eine derartige Türgegensprechanlage ist. Neben den bereits genannten Betriebselementen können auch andere Elemente und andere Funktionalitäten verwendet werden. So ist es denkbar, ein Betriebselement als Radio oder Raumthermostat, als Multifunktionsschalter zum Schalten und/oder Steuern unterschiedlichster Geräte oder als Zeitschaltuhr auszubilden. Auch die Verwendung unterschiedlicher Versorgungselemente, beispielsweise eines USB-Anschlusses und einer herkömmlichen Steckdose für elektrischen Strom, in einem einzigen Betriebselement ist möglich und denkbar. Insbesondere für das sich vorn befindliche erste Betriebselement, dass das zweite Betriebselement in der ersten Position abdeckt, bietet es sich zudem an, das Betriebselement frei programmierbar auszugestalten, um unterschiedliche Funktionalitäten zu realisieren. Ein freie Programmierung kann dabei auch darin bestehen, dass aus einer Liste vorinstallierter Funktionen ausgewählt werde kann.

Natürlich ist die Befestigungseinrichtung gemäß einem Ausführungsbeispiel der vorliegenden Erfindung nicht auf zwei Betriebselemente begrenzt. Vorzugsweise verfügt sie über wenigstens zwei erste Betriebselemente und/oder wenigstens zwei zweite Betriebselemente. Die wenigstens zwei ersten Betriebselemente sind dabei so angeordnet, dass sie in eine erste und in eine zweite Position bringbar sind. Dies kann separat geschehen, so dass jedes der ersten Betriebselemente, unabhängig von den jeweils anderen ersten Betriebselementen, in die erste Position oder in die zweite Position gebracht werden kann. Vorzugsweise befindet sich hinter jedem ersten Betriebselement ein zweites Betriebselement, das zugänglich wird, sobald das entsprechende erste Betriebselement in die zweite Position gebracht wird.

Vorteilhafterweise sind die wenigstens zwei ersten Betriebselemente gemeinsam in eine erste Position und in eine zweite Position bringbar. In einer bevorzugten Ausgestaltung werden alle zweiten Betriebselemente zugänglich und sichtbar, sobald die ersten Betriebselemente gemeinsam in die zweite Position gebracht wurden.

In einer alternativen Ausführungsform sind die wenigstens zwei ersten Betriebselemente zusätzlich in eine dritte Position bringbar. Werden beispielsweise zwei zweite Betriebselemente von zwei ersten Betriebselementen abgedeckt, die nur gemeinsam bewegt werden können, ist es möglich, die beiden ersten Betriebselemente in eine zweite Position zu bringen, in der nur eines der beiden zweiten Betriebselemente zugänglich wird. Das andere der beiden zweiten Betriebselemente bleibt durch die beiden ersten Betriebselemente, die sich nun in der zweiten Position befinden, abgedeckt. Erst wenn die ersten Betriebselemente in die dritte Position bewegt werden, wird in dieser Ausgestaltung das zweite der wenigstens zwei zweiten Betriebselemente zugänglich. Dabei kann erreicht werden, dass in dieser dritten Position der wenigstens zwei ersten Betriebselemente alle zweiten Betriebselemente zugänglich sind, oder dass nur eines oder eine bestimmte Anzahl der zweiten Betriebselemente zugänglich ist.

Vorteilhafterweise sind die beiden ersten Betriebselemente und/oder die beiden zweiten Betriebselemente unterschiedlich ausgebildet. Auf diese Weise lässt sich die Vielfalt der möglichen Funktionalitäten, die durch die entsprechende Befestigungseinrichtung realisiert werden, deutlich erhöhen. Natürlich sind auch mehr als zwei erste Betriebselemente und/oder mehr als zwei zweite Betriebselemente möglich.

In einer bevorzugten Ausgestaltung der vorliegenden Befestigungseinrichtung verfügt diese zudem über wenigstens ein drittes Betriebselement und gegebenenfalls weitere zusätzliche Betriebselemente. Diese können in einer Verallgemeinerung der der vorliegenden Erfindung zugrunde liegenden Idee hinter einem zweiten Betriebselement angeordnet sein. In diesem Fall ist auch das zweite Betriebselement in eine erste Position und eine zweite Position bringbar, wobei das dritte Betriebselement nur dann zugänglich ist, wenn sich das zweite Betriebselement in der zweiten Position befindet. Dabei ist es möglich, das erste Betriebselement und das zweite Betriebselement gemeinsam oder getrennt voneinander gegebenenfalls in unterschiedliche Richtungen zu bewegen.

Die Erfindung löst die gestellte Aufgabe zudem durch ein Einbauset zum Einbauen einer Befestigungseinrichtung gemäß einem der Ausführungsbeispiele der vorliegenden Erfindung in eine bestehende Installationsdose. Diese kann, wie bereits dargelegt, eine Aufputz-, Unterputz, oder Imputzdose sein. Auf diese Weise lassen sich auch bestehende Elektroinstallationen einfach nachrüsten oder um- und ausbauen.

Bei den hier beschriebenen Befestigungseinrichtungen lassen sich auch Module anderer Hersteller, beispielsweise über die Verwendung von universellen Einbaurahmen, einpassen und verwenden. Innenstationen für Türgegensprechanlagen oder Hausnetzwerke können ebenso verwendet werden, wie Einbauradios, Sensoriken oder Zentraleinheiten, beispielsweise für Alarmanlagen oder Heizungsanlagen.

Mit Hilfe der beiliegenden Zeichnungen wird nachfolgend ein Ausführungsbeispiel der vorliegenden Erfindung näher erläutert. Es zeigt:
- Figur 1 -: die schematische Schnittdarstellung (links) und Draufsicht (rechts) auf eine in einer Wand eingebaute Befestigungseinrichtung gemäß einem ersten Ausführungsbeispiel der vorliegenden Erfindung,
- Figur 2-: eine schematische Darstellung einer weiteren Befestigungseinrichtung,
- Figur 3 -: die schematische Darstellung einer dritten Befestigungseinrichtung gemäß einem dritten Ausführungsbeispiel der vorliegenden Erfindung und
- Figur 4 -: die Darstellung aus Figur 1 für ein weiteres Ausführungsbeispiel.

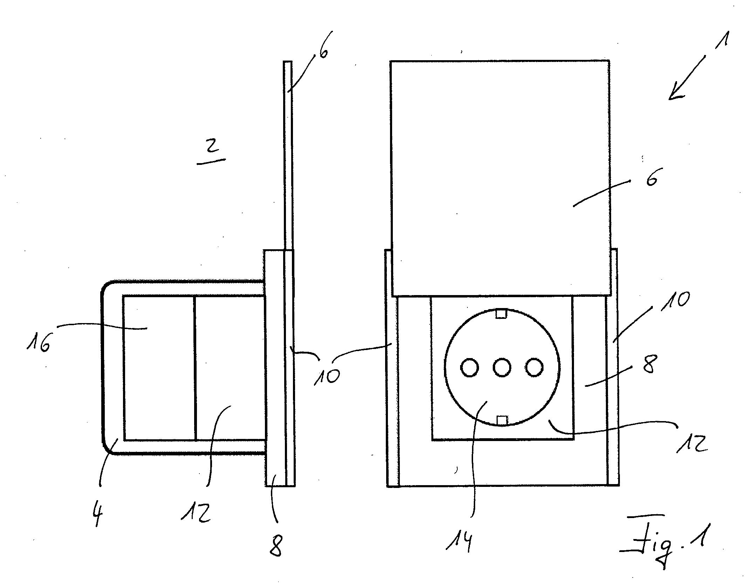

Figur 1 zeigt im linken Bereich die schematische Schnittdarstellung durch eine Befestigungseinrichtung 1 gemäß einem Ausführungsbeispiel der vorliegenden Erfindung. Sie ist in einer Wand 2 angeordnet, in der sich eine Installationsdose 4 befindet. Man erkennt ein erstes Betriebselement 6, das in Figur 1 bereits in die zweite Position, vorliegend also nach oben, verschoben wurde. Das erste Betriebselement 6 ist dafür in einem Rahmen 8 gelagert, der über zwei Schienen 10 verfügt. Dahinter befindet sich ein zweites Betriebselement 12, das im vorliegenden Fall als Steckdose 14 ausgebildet ist.

Wird das erste Betriebselement 6 in Figur 1 nach unten verschoben, wird es von der zweiten Position, die in Figur 1 dargestellt ist, in die erste Position verschoben. Dabei schiebt es sich vor das zweite Betriebselement 12 und verdeckt dieses, so dass es nicht zugänglich ist. Im linken Teil der Figur 1 ist zu erkennen, dass sich hinter dem zweiten Betriebselement 12 eine zusätzliche Baugruppe 16 befindet, die für Anschlüsse, mechanische Fixierungen und ähnliche Anforderungen zuständig ist. Hier werden elektrische Kontakte zwischen dem ersten Betriebselement 6 und/oder dem zweiten Betriebselement 12 einerseits und gegebenenfalls vorhandener elektrischer Leitungen in der Wand 2 hergestellt, sowie gegebenenfalls die mechanische Stabilität und mechanische Befestigung der Befestigungseinrichtung 1 in der Wand gewährleistet.

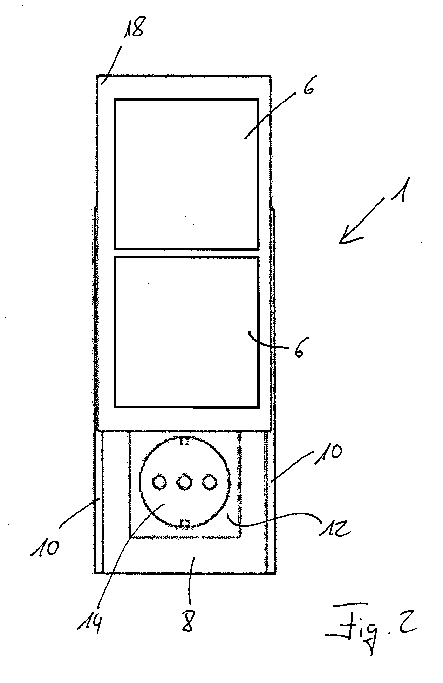

Figur 2 zeigt eine Befestigungseinrichtung 1 gemäß einem weiteren Ausführungsbeispiel der vorliegenden Erfindung. Man erkennt zwei erste Betriebselemente 6, die auf einem gemeinsamen Träger 18 angeordnet sind und die identische oder unterschiedliche Funktionalitäten aufweisen können. Der Träger 18 gleitet entlang von Schienen 10, die Teil des Rahmens 8 sind. Der Träger 18 und damit die beiden ersten Betriebselemente 6 befinden sich in Figur 2 in der zweiten Position, so dass ein zweites Betriebselement 12, das wieder als elektrische Steckdose ausgebildet ist, sichtbar und zugänglich ist. Hinter dem in Figur 2 unten dargestellten ersten Betriebselement 6 kann sich ein weiteres zweites Betriebselement 12 befinden, das in der gezeigten zweiten Position des Trägers 18 und damit in der zweiten Position der beiden ersten Betriebselemente 6 nicht sichtbar und nicht zugänglich ist. Um auch dieses zweite Betriebselement 12, das in Figur 2 nicht dargestellt ist, zugänglich zu machen, muss der Träger 18 und damit auch die beiden ersten Betriebselemente 6 in eine dritte Position gebracht werden. Diese kann beispielsweise durch eine weitere Verschiebung des Trägers 18 nach oben erreicht werden. In diesem Zustand wären beide zweiten Betriebselemente 12 sichtbar und zugänglich. Alternativ dazu kann die dritte Position auch eine Verschiebung des Träges 18 und damit der beiden ersten Betriebselemente 6 nach unten erfordern, so dass nur das andere, in Figur 2 nicht dargestellte, zweite Betriebselement 12 zugänglich wird.

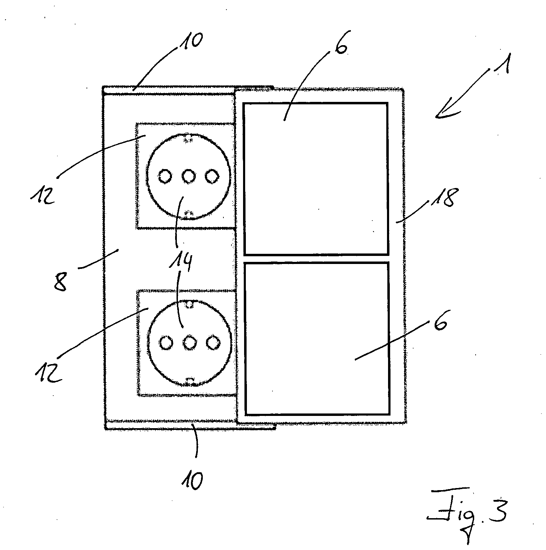

Auch in Figur 3 ist eine Befestigungseinrichtung 1 gemäß einem weiteren Ausführungsbeispiel der vorliegenden Erfindung dargestellt. Auch sie verfügt über zwei erste Betriebselemente 6 und zwei zweite Betriebselemente 12, die jeweils als Steckdose 14 ausgebildet sind und von einem gemeinsamen Rahmen 8 umgeben sind. Der Rahmen verfügt wieder über Schienen 10, entlang derer der Träger 18, der die beiden ersten Betriebselemente 6 trägt, verschoben werden kann. Wie in Figur 2 sind dadurch die beiden ersten Betriebselemente 6 nur gemeinsam verschiebbar. Dies ist gegebenenfalls von Vorteil, jedoch nicht zwangsläufig nötig. Es ist auch denkbar, jedes der ersten Betriebselemente 6 separat verschiebbar oder bewegbar auszugestalten.

Die beiden ersten Betriebselemente 6 und die beiden zweiten Betriebselemente 12 sind jeweils nebeneinander in einer Erstreckungsrichtung angeordnet, die bei den in Figur 2 und 3 gezeigten Ausführungsbeispielen identisch ist. Anders als in Figur 2 wird jedoch der Träger 18 mit den beiden ersten Betriebselementen 6 in Figur 3 in einer Richtung senkrecht zu dieser Erstreckungsrichtung verschoben, so dass die beiden zweiten Betriebselemente 12 immer gleichzeitig zugänglich werden. Auch dies ist gegebenenfalls von Vorteil, jedoch nicht zwangsläufig nötig.

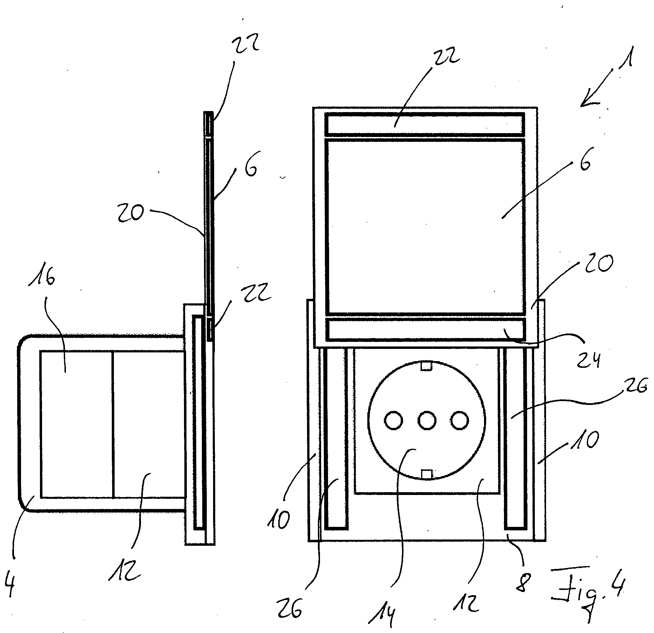

Figur 4 zeigt die Darstellung aus Figur 1 für ein weiteres Ausführungsbeispiel der vorliegenden Erfindung. Auf einem Schieber 20 ist das erste Betriebselement 6 angeordnet, das beispielsweise eine Sensoriktaste sein kann. In Figur 4 oberhalb des ersten Betriebselementes 6 ist ein Sendeelement 22 angeordnet, das beispielsweise ein Infrarot- oder Funksender sein kann. Dieses ist in Figur 4 zwar dargestellt, vorteilhafterweise jedoch nicht als Sendeelement 22 erkennbar, um den ästhetischen Gesamteindruck der Befestigungseinrichtung 1 nicht zu beeinträchtigen. Durch das Sendeelement 22 können Steuerbefehle, die von dem ersten Betriebselement 6 erzeugt oder aufgenommen werden, an ein in Figur 4 nicht dargestelltes Gerät übermittelt werden. An dem Schieber 20 ist zudem im Figur 4 gezeigten Ausführungsbeispiel eine Batterie 24 angeordnet, die für die Stromversorgung des ersten Betriebselementes 6 und des Sendeelementes 22 verwendet wird.

Der Schieber 20 ist entlang der Schienen 10 verschieblich gelagert, wie dies auch bei dem in Figur 1 gezeigten Ausführungsbeispiel der Fall war. Das zweite Betriebselement 12 ist auch im in Figur 4 gezeigten Ausführungsbeispiel die Steckdose 14.

Zusätzlich zu dem in Figur 1 gezeigten Ausführungsbeispiel verfügt der Rahmen 8 jedoch über Tastelemente 26, die auf Druck reagieren und unterschiedliche Aufgabe ausführen können.

Einerseits können die Tastelemente verwendet werden, um eine gegebenenfalls vorhandene Verriegelung des Schiebers 20 gegen Verschieben entlang der Schienen 10 aufzuheben. Dabei kann es sich um eine Rastmechanik, die auch "Push-To-Open"-Mechanik genannt werden kann, handeln. Um den Schieber 20 entlang der Schienen 10 zu verschieben, muss auf den Schieber 20 an den Stellen, unterhalb derer sich die Tastelemente 26 befinden, ein Druck ausgeübt werden. Dadurch wird eine Rastmechanik entriegelt, so dass der Schieber 20 verschoben werden kann.

Andererseits können die Tastelemente 26 zusätzlich oder alternativ zu der beschriebenen Funktion auch dazu verwendet werden, dass zweite Betriebselement 12 zu entfernen, um so den Zugang zur Baugruppe 16, die sich hinter dem zweiten Betriebselement 12 befindet, zu ermöglichen. Auch dabei können die Tastelemente 26 verwendet werden, die beispielsweise eine Rastmechanik betätigen.

### Bezugszeichenliste

- 1 -: Befestigungseinrichtung
- 2 -: Wand
- 4 -: Installationsdose
- 6 -: erstes Betriebselement
- 8 -: Rahmen
- 10 -: Schiene
- 12 -: zweites Betriebselement
- 14 -: Steckdose
- 16 -: Baugruppe
- 18 -: Träger
- 20 -: Schieber
- 22 -: Sendeelement
- 24 -: Batterie
- 26 -: Tastelement

## Patentansprüche

1. Befestigungseinrichtung (1) mit einem ersten elektrischen und/oder elektronischen Betriebselement (6) und einem zweiten elektrischen und/oder elektronischen Betriebselement (12), zur Befestigung des ersten Betriebselementes (6) und des zweiten Betriebselementes (12) an oder in einer Wand (2), wobei das erste Betriebselement (6) in eine erste Position und in eine zweite Position bringbar ist und das zweite Betriebselement (12) nur zugänglich ist, wenn sich das erste Betriebselement (6) in der zweiten Position befindet, wobei das erste Betriebselement (6) unabhängig von der Position, in der es sich befindet, zugänglich und bestimmungsgemäß benutzbar ist, wobei das zweite Betriebselement (12) eine Steckdose ist, wobei das erste Betriebselement (6) auf einem Schieber (20) angeordnet ist, der entlang von Schienen (10) in einem Rahmen (8) aus der ersten Position in die zweite Position und umgekehrt verschiebbar gelagert ist, **dadurch gekennzeichnet, dass** der Rahmen (8) Tastelemente (26) aufweist, um eine Verriegelung des Schiebers (20) gegen Verschieben entlang der Schienen (10) aufzuheben.

2. Befestigungseinrichtung (1) nach Anspruch 1, **dadurch gekennzeichnet, dass** das erste Betriebselement (6) und das zweite Betriebselement (12) eine gemeinsame Schnittstelle zum Anschließen an eine elektrische Spannung aufweisen.

3. Befestigungseinrichtung (1) nach einem der vorstehenden Ansprüche, **dadurch gekennzeichnet, dass** das erste Betriebselement (6) und/oder das zweite Betriebselement (12) ein Bedienelement, insbesondere einen Hub-, Dreh-, Kipp- oder Schiebeschalter aufweisen.

4. Befestigungseinrichtung (1) nach Anspruch 3, **dadurch gekennzeichnet, dass** das Bedienelement einen Berührungssensor, ein Touchpad und/oder einen Näherungssensor und/oder einen Bewegungssensor aufweist.

5. Befestigungseinrichtung (1) nach einem der vorstehenden Ansprüche, **dadurch gekennzeichnet, dass** das erste Betriebselement (6) und/oder das zweite Betriebselement (12) ein Anzeigeelement aufweist.

6. Befestigungseinrichtung (1) nach Anspruch 5, **dadurch gekennzeichnet, dass** das Anzeigeelement ein optisches und/oder ein akustisches Anzeigeelement ist.

7. Befestigungseinrichtung (1) nach Anspruch 6, **dadurch gekennzeichnet, dass** das Anzeigeelement ein Monitor ist.

8. Befestigungseinrichtung (1) nach einem der vorstehenden Ansprüche, **dadurch gekennzeichnet, dass** die Befestigungseinrichtung (1) eine Spannungsquelle und/oder eine Vorrichtung zum Erzeugen einer elektrischen Spannung aufweist.

9. Befestigungseinrichtung (1) nach einem der vorstehenden Ansprüche, **dadurch gekennzeichnet, dass** die Befestigungseinrichtung (1) wenigstens zwei erste Betriebselemente (6) und/oder wenigstens zwei zweite Betriebselemente (12) aufweist.

10. Befestigungseinrichtung (1) nach Anspruch 9, **dadurch gekennzeichnet, dass** die wenigstens zwei ersten Betriebselemente (6) gemeinsam in die erste Position und in die zweite Position bringbar sind.

11. Befestigungseinrichtung (1) nach einem der vorstehenden Ansprüche, **dadurch gekennzeichnet, dass** die beiden ersten Betriebselemente (6) und/oder die beiden zweiten Betriebselemente (12) verschieden ausgebildet sind.

## Claims

1. Fastening means (1) which comprises a first electrical and/or electronic operating element (6) and a second electrical and/or electronic operating element (12) and is intended for fastening the first operating element (6) and the second operating element (12) to or in a wall (2), it being possible to bring the first operating element (6) into a first position and into a second position, and the second operating element (12) being accessible only when the first operating element (6) is in the second position, the first operating element (6) being accessible and capable of being used as intended irrespective of the position it is in, the second operating element (12) being a socket, the first operating element (6) being arranged on a slide (20) that is mounted so to be movable, along rails (10) in a frame (8), out of the first position into the second position and vice versa, **characterized in that** the frame (8) comprises push-button elements (26) in order to release locking of the slide (20) against movement along the rails (10).

2. Fastening means (1) according to claim 1, **characterized in that** the first operating element (6) and the second operating element (12) comprise a common interface for connecting to an electrical voltage.

3. Fastening means (1) according to either of the preceding claims, **characterized in that** the first operating element (6) and/or the second operating element (12) is a control element, in particular a lifting, rotary, flip or slide switch.

4. Fastening means (1) according to claim 3, **characterized in that** the control element comprises a touch sensor, a touchpad and/or a proximity sensor and/or a movement sensor.

5. Fastening means (1) according to any of the preceding claims, **characterized in that** the first operating element (6) and/or the second operating element (12) comprises an indicator element.

6. Fastening means (1) according to claim 5, **characterized in that** the indicator element is an optic and/or an acoustic indicator element.

7. Fastening means (1) according to claim 6, **characterized in that** the indicator element is a monitor.

8. Fastening means (1) according to any of the preceding claims, characterized that the fastening means (1) comprises a voltage source and/or a device for generating an electrical voltage.

9. Fastening means (1) according to any of the preceding claims, **characterized in that** the fastening means (1) comprises at least two first operating elements (6) and/or at least two second operating elements (12).

10. Fastening means (1) according to claim 9, **characterized in that** the at least two first operating elements (6) can be jointly brought into the first position and into the second position.

11. Fastening means (1) according to any of the preceding claims, **characterized in that** the two first operating elements (6) and/or the two second operating elements (12) are different.

## Revendications

1. Moyen de fixation (1) qui comprend un premier élément de fonctionnement électrique et/ou électronique (6) et un second élément de fonctionnement électrique et/ou électronique (12) et est prévu pour fixer le premier élément de fonctionnement (6) et le second élément de fonctionnement (12) à ou dans une paroi (2), étant possible d'amener le premier élément de fonctionnement (6) dans une première position et dans une seconde position, et le second élément de fonctionnement (12) étant accessible uniquement lorsque le premier élément de fonctionnement (6) est dans la seconde position, le premier élément de fonctionnement (6) étant accessible et pouvant être utilisé comme prévu indépendamment de la position dans laquelle il se trouve, le second élément de fonctionnement (12) étant une douille, le premier élément de fonctionnement (6) étant agencé sur une glissière (20) qui est montée de façon à être mobile, le long de rails (10) dans une structure (8), hors de la première position dans la seconde position et vice-versa, **caractérisé en ce que** la structure (8) comprend des éléments de bouton-poussoir (26) afin de déverrouiller la glissière (20) contre tout mouvement le long des rails (10).

2. Moyen de fixation (1) selon la revendication 1, **caractérisé en ce que** le premier élément de fonctionnement (6) et le second élément de fonctionnement (12) comprennent une interface commune destiné à être connectée à une tension électrique.

3. Moyen de fixation (1) selon l'une des revendications précédentes, **caractérisé en ce que** le premier élément de fonctionnement (6) et/ou le second élément de fonctionnement (12) sont des éléments de commande, en particulier un commutateur de levage, rotatif, à bascule ou à coulisse.

4. Moyen de fixation (1) selon la revendication 3, **caractérisé en ce que** l'élément de commande comprend un capteur tactile, un pavé tactile et/ou un capteur de proximité et/ou un capteur de mouvement.

5. Moyen de fixation (1) selon l'une quelconque des revendications précédentes, **caractérisé en ce que** le premier élément de fonctionnement (6) et/ou le second élément de fonctionnement (12) comprennent un élément d'indicateur.

6. Moyen de fixation (1) selon la revendication 5, **caractérisé en ce que** l'élément d'indicateur est un élément d'indicateur optique et/ou acoustique.

7. Moyen de fixation (1) selon la revendication 6, **caractérisé en ce que** l'élément d'indicateur est un dispositif de surveillance.

8. Moyen de fixation (1) selon l'une quelconque des revendications précédentes, **caractérisé en ce que** le moyen de fixation (1) comprend une source de tension et/ou un dispositif destiné à générer une tension électrique.

9. Moyen de fixation (1) selon l'une quelconque des revendications précédentes, **caractérisé en ce que** le moyen de fixation (1) comprend au moins deux premiers éléments de fonctionnement (6) et/ou au moins deux seconds éléments de fonctionnement (12).

10. Moyen de fixation (1) selon la revendication 9, **caractérisé en ce que** les au moins deux premiers éléments de fonctionnement (6) peuvent être amenés conjointement dans la première position et dans la seconde position.

11. Moyen de fixation (1) selon l'une quelconque des revendications précédentes, **caractérisé en ce que** les deux premiers éléments de fonctionnement (6) et/ou les deux seconds éléments de fonctionnement (12) sont différents.
